# EUROPÄISCHE PATENTSCHRIFT

(11) **EP 1 876 550 B1**
(45) Veröffentlichungstag und Bekanntmachung des Hinweises auf die Patenterteilung: **14.08.2013**
(21) Anmeldenummer: 06116828.2
(22) Anmeldetag: 07.07.2006
(51) Int. Cl.: G06F 21/00, H04L 29/06

(54) **Verfahren und System zur verschlüsselten Datenübertragung**
Method and system for encrypted data transmission
Procédé et système pour la transmission de données chiffrées

(43) Veröffentlichungstag der Anmeldung: 09.01.2008
(73) Patentinhaber: Swisscom AG, 3050 Bern (CH)
(72) Erfinder: Linder, Jan, 3013, Bern (CH); Danzeisen, Marc, 3063, Ittigen (CH); Winiker, Simon, 3014, Bern (CH); Baumgartner, Florian, 3008, Bern (CH)
(74) Vertreter: Scheuzger, Beat Otto

(56) Entgegenhaltungen:
- EP-A- 1 480 100
- EP-A2- 1 372 055
- US-A1- 2002 013 772

## Beschreibung

### Technisches Gebiet

Die vorliegende Erfindung bezieht sich auf ein Verfahren und ein System zur Datenübertragung.

### Stand der Technik

Eine Übertragung von Daten zwischen Terminals und/oder Server erfolgt im Stand der Technik gemäss unterschiedlicher Verfahren. Oft sind solche Verfahren besonders angepasst, um Nachrichten wie beispielsweise E-Mail Nachrichten oder aktuelle Schlagzeilen zu übertragen oder um Multimediadaten wie eine Audiodatei oder eine Videodatei zu übertragen. Um beispielsweise Daten von einem Server auf ein Terminal eines Benutzers zu übertragen, kann es erforderlich sein, dass die Berechtigung des Benutzers für den Zugriff auf bestimmte Daten zuerst überprüft wird. Eine solche Überprüfung der Berechtigung kann beispielsweise durch die Abfrage eines Benutzernamens und eines Passworts erfolgen. Da eine Übertragung von Daten oft über öffentliche Netzwerke erfolgt, ist es von Vorteil, diese Übertragung von Daten mittels einer gesicherten Datenverbindung, wie beispielsweise mittels einer VPN Verbindung (VPN: Virtual Private Network), durchzuführen. Die Übertragung von Daten zwischen einem Server und einem Terminal lässt sich so in eine Phase der Überprüfung der Berechtigung bzw. eine Phase der Authentisierung und in eine Phase der Übermittlung von Daten unterteilen. Wegen der Benutzerinteraktion dauert die Phase der Authentisierung oft relativ lange, wobei jedoch nur wenig Netzwerkbandbreite benötigt wird. Die Phase der Übermittlung von Daten kann demgegenüber je nach Datenvolumen nur kurz dauern, wobei die verfügbare Netzwerkbandbreite vollständig genutzt wird.

So werden beispielsweise E-Mail Nachrichten an einen Benutzer auf einem E-Mail Server abgespeichert. Der Benutzer ruft die auf dem E-Mail Server abgespeicherten E-Mail Nachrichten mittels eines E-Mail Clients ab. Dazu werden im Stand der Technik Protokolle wie POP (POP: Post Office Protocol) oder IMAP (IMAP: Internet Mail Access Protocol) verwendet. Mittels des E-Mail Clients und solcher Protokolle wird zwischen dem E-Mail Client und dem E-Mail Server eine Verbindung aufgebaut, worauf der E-Mail Client den E-Mail Server nach verfügbaren E-Mail Nachrichten überprüft und gegebenenfalls neue E-Mail Nachrichten auf den E-Mail Client herunterlädt. Selbstverständlich wird der E-Mail Client mittels einer Authentisierung auf die Berechtigung zum Zugriff auf die E-Mail Nachrichten überprüft. Oft dauert das Authentisieren viel länger als das anschliessende Überprüfen und Herunterladen der E-Mail Nachrichten. Die Überprüfung von E-Mail Nachrichten kann auch auf einem VPN Tunnel basieren. Allerdings wird in diesem Fall ein VPN Tunnel auch dann aufgebaut, falls auf dem E-Mail Server gar keine neuen Nachrichten verfügbar sind. Dies führt zu einer Inneffizienz, da auch dann ein VPN Tunnel aufgebaut wird, falls gar keine Daten zur Übertragung bereitstehen.

Im Stand der Technik ist eine solche zweiphasige Übertragung von Daten insbesondere für Benutzer von mobilen Terminals mit vielen Nachteilen behaftet. So stehen dem Benutzer beispielsweise an Bahnhöfen zwar leistungsfähige WLAN oder UWB Netzwerke (WLAN: Wireless Local Area Network; UWB: Ultra Wide Band) zur Verfügung. Oft hat ein Benutzer an den Bahnhöfen jedoch keine Zeit, um sich für den Zugriff auf Daten zu authentisieren und Daten auf das mobile Terminal herunterzuladen. Nachdem der Benutzer jedoch im Zug Platz genommen hat, hat der Benutzer oft genügend Zeit, um sich für den Zugriff auf Daten zu authentisieren. Oft hat der Zug jedoch zu diesem Zeitpunkt das Bahnhofsgelände schon verlassen und dem Benutzer stehen zu diesem Zeitpunkt oft nur viel weniger leistungsfähige Netzwerke, wie beispielsweise ein GSM Netzwerk oder ein UMTS Netzwerk (GSM: Global System for Mobile Communications; UMTS: Universal Mobile Telecommunications System), zur Verfügung. Der Benutzer kann somit zu diesem Zeitpunkt auf grosse Datenmengen, wie beispielsweise auf eine E-Mail Nachricht mit einer Videodatei im Attachement, nicht zugreifen, da die Übertragungskapazität eines solchen weniger leistungsfähigen Netzwerks nicht ausreichen würde. Zusammengefasst ist somit die im Stand der Technik verwendete Authentisierung und anschliessende Datenübertragung einerseits für den Benutzer unbequem, da dieser eine Benutzerinteraktion vornehmen muss. Andererseits führt diese Art der Benutzerinteraktion dazu, dass eine Optimierung der Auslastung einer Netzwerkinfrastruktur verhindert wird.

Im Dokument EP 1 372 055 wird eine Digital Rights Management Architektur offenbart. Ein Packager bereitet Daten für einen Benutzer auf und ein Licensor stellt eine Lizenz für den Benutzer zur Verfügung. Der Packager und der Licensor teilen einen geheimen Schlüssel und können einen Content Schlüssel auf die aufbereiteten Daten berechnen. Die aufbereiteten und verschlüsselten Daten sowie der Content Schlüssel werden an den Benutzer übermittelt.

### Darstellung der Erfindung

Es ist eine Aufgabe der vorliegenden Erfindung, ein neues Verfahren und ein neues System zur Datenübertragung vorzuschlagen, welches Verfahren und welches System nicht die Nachteile des Standes der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor. Insbesondere werden diese Ziele durch die Erfindung durch ein Verfahren zur Datenübertragung erreicht, wobei das Verfahren durch ein Zentralmodul ausgeführt ist. Das Verfahren umfasst:
Empfangen von Authentisierungsdaten von einem
Kommunikationsendgerät,
Speichern von den Authentisierungsdaten, wobei die Authentisierungsdaten einer Identifikation zugeordnet sind,
Erzeugen eines elektronischen Schlüssels, wobei der elektronische Schlüssel den Authentisierungsdaten und der Identifikation zugeordnet abgespeichert wird,
Authentisieren einer Berechtigung am elektronischen Schlüssel für das Kommunikationsendgerät mittels der empfangenen Authentisierungsdaten,
Überprüfen einer Verfügbarkeit des Kommunikationsendgeräts mittels eines Verfügbarkeitsmoduls des Zentralmoduls,
Erzeugen von verschlüsselten Daten, mittels eines Verschlüsselungsmoduls, von Daten und von mindestens einem Teil des elektronischen Schlüssels,
Übertragen der verschlüsselten Daten und mindestens eines Teils des elektronischen Schlüssels an das Kommunikationsendgerät, wobei das Kommunikationsgerät verfügbar und berechtigt ist. Ein solches Verfahren hat insbesondere den Vorteil, dass die Übertragung der Authentisierungsdaten respektive des elektronischen Schlüssels und die Übertragung der verschlüsselten Daten vollkommen asynchron erfolgen kann. So können auf dem Kommunikationsendgerät beispielsweise E-Mail Nachrichten erstellt werden und mit dem elektronischen Schlüssel verschlüsselt werden. Zu irgendeinem Zeitpunkt, beispielsweise sobald sich das Kommunikationsendgerät im Wirkungsbereich eines drahtlosen Kommunikationsnetzwerk befindet, können die verschlüsselten Daten über das drahtlose Kommunikationsnetzwerk sicher übertragen werden, vom Zentralmodul entschlüsselt werden und an einen E-Mail Server weitergeleitet werden. Selbstverständlich können verschlüsselte Daten sowohl vom Zentralmodul an das Kommunikationsendgerät als auch vom Kommunikationsendgerät an das Zentralmodul übertragen werden.

Ein solches Verfahren hat auch den Vorteil, dass die Authentisierung für den Zugriff auf Daten und die eigentliche Übertragung von Daten an ein Kommunikationsendgerät zu verschiedenen Zeitpunkten erfolgen kann. So kann die Übertragung von verschlüsselten Daten zu einem Zeitpunkt erfolgen, bei dem sich der Benutzer in der Nähe eines leistungsfähigen Netzwerks befindet und die Authentisierung für den Zugriff auf den elektronischen Schlüssel und somit auf die Daten kann zu einem Zeitpunkt erfolgen, bei dem der Benutzer genügend Zeit hat, um eine Authentisierung durchzuführen.

In einer Ausführungsvariante wird im Zentralmodul respektive auf dem Kommunikationsendgerät ein Benutzerprofil abgespeichert, wobei Daten gemäss dem Benutzerprofil selektiert und verschlüsselt sowie an das Kommunikationsendgerät respektive an ein weiteres Kommunikationsgerät übertragen werden. Ein solches Verfahren hat insbesondere den Vorteil, dass ein Benutzer in einem Benutzerprofil eintragen kann, welche Daten verschlüsselt und an das Kommunikationsendgerät respektive das weitere Kommunikationsgerät übertragen werden sollen. So kann in einem Benutzerprofil beispielsweise eingetragen sein, dass alle E-Mail Nachrichten eines Benutzers jeweils um eine bestimmte Zeit, beispielsweise morgens um die Zeit um welche der Benutzer sich am Bahnhof aufhält um einen Zug zu besteigen, verschlüsselt werden und an das Kommunikationsendgerät des Benutzers übermittelt werden.

Erfindungsgemäss wird mittels eines Verfügbarkeitsmoduls des Zentralmoduls die Verfügbarkeit des Kommunikationsendgeräts überprüft und die verschlüsselten Daten werden bei Verfügbarkeit des Kommunikationsendgeräts an das Kommunikationsendgerät übertragen. Ein solches Verfahren hat insbesondere den Vorteil, dass die verschlüsselten Daten zum frühestens möglichen Zeitpunkt an das Kommunikationsendgerät respektive an das weitere Kommunikationsgerät übermittelt werden können.

In einer weiteren Ausführungsvariante wird mittels eines Aktivierungsmoduls des Zentralmoduls eine Netzwerkschnittstelle des Kommunikationsendgeräts aktiviert und die verschlüsselten Daten werden über die aktivierte Netzwerkschnittstelle an das Kommunikationsendgerät übertragen. So kann beispielsweise eine erste Netzwerkschnittstelle des Kommunikationsendgeräts, wie beispielsweise eine GSM Netzwerkschnittstelle, ständig eingeschaltet sein und über diese erste Netzwerkschnittstelle kann eine zweite Netzwerkschnittstelle, wie beispielsweise eine WLAN Netzwerkschnittstelle, des Kommunikationsendgeräts aktiviert werden. Ein solches Verfahren hat insbesondere den Vorteil, dass Netzwerkschnittstellen durch das Zentralmodul nur dann eingeschaltet werden, falls verschlüsselte Daten zur Übertragung bereitgestellt sind, womit insbesondere der Stromverbrauch auf dem Kommunikationsendgerät minimiert werden kann.

In einer anderen Ausführungsvariante werden die verschlüsselten Daten an ein Netzwerkgerät einer Netzwerkinfrastruktur übertragen, wobei die verschlüsselten Daten auf dem Netzwerkgerät abgespeichert werden und asynchron vom Netzwerkgerät an das Kommunikationsendgerät übertragen werden. Das genannte Netzwerkgerät kann sich beispielsweise auf ein Netzwerkgerät eines WLAN Hotspots beziehen, wobei zu einem ersten Zeitpunkt, beispielsweise am frühen Morgen zu einer Zeit mit geringer Netzwerkbelastung, die verschlüsselten Daten an das Netzwerkgerät übertragen werden und zu einem zweiten Zeitpunkt, beispielsweise zur Zeit bei welcher der Benutzer am Bahnhof auf den Zug wartet, von diesem Netzwerkgerät an das Kommunikationsendgerät des Benutzers übertragen werden. Ein solches Verfahren hat insbesondere den Vorteil, dass die Auslastung einer Netzwerkinfrastruktur optimiert werden kann. Selbstverständlich kann vor der Verschlüsselung der Daten eine Anpassung der Daten an ein Kommunikationsendgerät durchgeführt werden. Falls sich beispielsweise das Kommunikationsendgerät des Benutzers auf einen mobilen Computer mit einer XGA-Bildschirmauflösung von 1024x768 Pixel bezieht, macht es keinen Sinn, eine Videodatei mit einer sehr grossen Auflösung direkt zu verschlüsseln. Viel sinnvoller ist es in diesem Fall, die Videodatei durch eine Transformation der Auflösung zuerst an die Bildschirmauflösung des Benutzers anzupassen und erst dann eine Verschlüsselung der Videodatei durchzuführen. Eine solche Transformation der Daten kann insbesondere dann durchgeführt werden, falls beispielsweise in einem Benutzerprofil entsprechende Informationen abgespeichert sind.

In einer anderen Ausführungsvariante wird bei der Übermittlung des mindestens einen Teils des elektronischen Schlüssels ein Geldwertbetrag von einem Benutzerkonto abgebucht. Ein solches Verfahren hat insbesondere den Vorteil, dass mittels der Übertragung von verschlüsselten Daten dem Benutzer verrechenbare Dienstleistungen, wie beispielsweise das zur Verfügung stellen von Audio- oder Videodateien, angeboten werden können. Selbstverständlich gilt die Dienstleistung nur dann als erbracht, falls sowohl die verschlüsselten Daten als auch der dazugehörige Schlüssel auf das Kommunikationsendgerät des Benutzers übertragen worden sind.

In einer weiteren Ausführungsvariante umfassen die verschlüsselten Daten einen Programmcode, welcher Programmcode zum Entschlüsseln der verschlüsselten Daten ausgeführt werden muss, wobei bei der Ausführung des Programmcodes Gültigkeitskriterien überprüft werden. So kann der Programmcode beispielsweise so ausgestaltet sein, dass die Gültigkeit des Schlüssels in Bezug auf eine Zeitmessung, auf einen zentralen Server mit welchem die Gültigkeit von Schlüsseln überwacht wird oder gemäss irgendeinem anderen Verfahren überprüft werden. Ein solches Verfahren hat insbesondere den Vorteil, dass beispielsweise definiert werden kann, ab wann die verschlüsselten Daten nicht mehr verfügbar sind. Mit einem solchen Verfahren ist zudem die Kompatibilität mit aus dem DRM (DRM: Digital Rights Management) bekannten Verfahren gewährleistet.

In einer anderen Ausführungsvariante wird den Daten und/oder den verschlüsselten Daten eine Identifikation zugeordnet und die Authentisierungsdaten werden der Identifikation zugeordnet abgespeichert. Eine solche Identifikation kann beispielsweise das Resultat einer Hashfunktion der verschlüsselten Daten ausgestaltet sein. Ein solches Verfahren hat insbesondere den Vorteil, dass die Authentisierung für den Zugriff auf die verschlüsselten Daten auch in Bezug auf die verschlüsselten Daten unterschiedlich ausgestaltet werden kann.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegten Figuren illustriert:
Figur 1 zeigt ein Blockdiagramm mit den einzelnen Bestandteilen zur Verschlüsselung von Daten und zur Übermittlung der verschlüsselten Daten.
Figur 2 zeigt ein Blockdiagramm mit den einzelnen Bestandteilen zur Authentisierung und Entschlüsselung der verschlüsselten Daten.
Figur 3 zeigt ein Blockdiagramm mit den einzelnen Bestandteilen zur Verschlüsselung und zum Versenden von verschlüsselten Daten.

### Weg(e) zur Ausführung der Erfindung

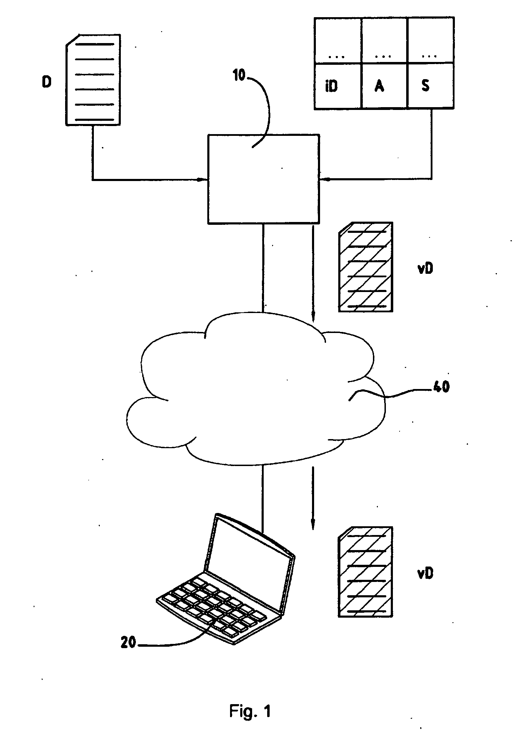

In Figur 1 bezieht sich das Bezugszeichen 10 auf ein Zentralmodul. Das Zentralmodul 10 kann beispielsweise als Softwaremodul eines Netzwerkservers ausgestaltet sein. Selbstverständlich kann das Zentralmodul 10 auch vollständig als Hardwaremodul mit entsprechenden elektronischen Schaltkreisen ausgestaltet sein. In Figur 1 bezieht sich das Bezugszeichen D auf elektronische Daten. Die Daten D können irgendwelche elektronische Daten sein, beispielsweise E-Mail Nachrichten, Texte, Animationen, Audiodateien, Videodateien oder irgendwelche andere elektronische Daten. In Figur 1 bezieht sich das Bezugszeichen A auf Authentisierungsdaten und das Bezugszeichen S bezieht sich auf einen elektronischen Schlüssel. Die Authentisierungsdaten A können beispielsweise einen Benutzernamen und ein Passwort oder eine Passphrase umfassen. Der elektronische Schlüssel S kann beispielsweise aus einem symmetrischen elektronischen Schlüssel mit einem secret key oder aus einem asymmetrischen elektronischen Schlüssel mit einem public key und einem private key bestehen. Die Authentisierungsdaten A werden dem elektronischen Schlüssel S zugeordnet abgespeichert, beispielsweise indem das Zentralmodul 10 eine entsprechende Tabelle umfasst. In Figur 1 bezieht sich das Bezugszeichen 40 auf ein Kommunikationsnetzwerk. Das Kommunikationsnetzwerk kann sich beispielsweise auf das Internet beziehen und kann aus verschiedenen Netzwerken unterschiedlicher Technologien aufgebaut sein. So kann das Kommunikationsnetzwerk GSM-Netzwerke, UMTS-Netzwerke, WLAN-Netzwerke, Ethernet-Netzwerke, UWB-Netzwerke oder irgendwelche anderen Netzwerke umfassen. Wie in Figur 1 gezeigt, ist das Zentralmodul 10 insbesondere mit dem Kommunikationsnetzwerk 40 verbindbar. Mittels des elektronischen Schlüssels S sowie eines Verschlüsselungsmoduls des Zentralmoduls 10 können Daten D verschlüsselt werden. Eine solche Verschlüsselung kann sich auf irgendeinen Verschlüsselungsalgorithmus beziehen, beispielsweise auf einen DES Algorithmus (DES: Date Encryption Standard), auf einen PGP Algorithmus (PGP: Pretty Good Privacy), auf einen IDEA Algorithmus (IDEA: International Data Encryption Standard) oder auf irgendeinen anderen Verschlüsselungsalgorithmus. Durch die Verschlüsselung der Daten D werden verschlüsselte Daten vD erzeugt. Die Authentisierungsdaten A und der elektronische Schlüssel S können zudem einer Identifikation iD der Daten zugeordnet abgespeichert werden, sodass die Authentisierungsdaten A und der elektronische Schlüssel S nur in Bezug auf Daten, welche durch die Identifikation iD der Daten identifizierbar sind, gültig sind. Selbstverständlich können auch in Bezug auf die Identifikation iD der Daten entsprechende Tabellen im Zentralmodul 10 vorgesehen sein.

In Figur 1 bezieht sich das Bezugszeichen 20 auf ein Kommunikationsendgerät. Das Kommunikationsendgerät 20 kann irgendein Terminal eines Benutzers sein, beispielsweise ein mobiler Computer wie ein Notebook oder ein PDA (PDA: Personal Digital Assistant), ein mobiles Telefon, eine Spielkonsole, ein festinstallierter Computer oder irgendein anderes Kommunikationsendgerät. Das Kommunikationsendgerät 20 ist wie in Figur 1 gezeigt mit dem Kommunikationsnetzwerk 40 verbindbar. Eine solche Verbindung kann sich auf eine drahtlose Verbindung, wie beispielsweise eine WLAN Verbindung, eine GSM Verbindung oder irgendeine andere drahtlose Verbindung, oder auf eine drahtbasierte Verbindung, wie beispielsweise eine twisted-pair Ethernet Verbindung oder irgendeine andere drahtbasierte Verbindung, beziehen.

Die verschlüsselten Daten vD können so über das Kommunikationsnetzwerk 40 auf das Kommunikationsendgerät 20 übertragen und dort abgespeichert werden. Es gibt verschiedenste Möglichkeiten, um Daten D somit als verschlüsselte Daten vD auf dem Kommunikationsendgerät 20 abzuspeichern. So können E-Mail Nachrichten, Texte, Animationen, Audiodateien, Videodateien oder irgendwelche andere Daten als verschlüsselte E-Mail Nachrichten, verschlüsselte Texte, verschlüsselte Animationen, verschlüsselte Audiodateien oder verschlüsselte Videodateien auf dem Kommunikationsendgerät 20 abgespeichert werden. Es ist allerdings so, dass die verschlüsselten Daten vD noch nutzlos sein können, da der Schlüssel zum Entschlüsseln der verschlüsselten Daten vorerst nur auf dem Zentralmodul 10 abgespeichert ist.

Die Übertragung der verschlüsselten Daten vD auf das Kommunikationsendgerät 20 kann zu irgendeinem günstigen Zeitpunkt erfolgen. So kann sich ein günstiger Zeitpunkt auf das Eintreffen von neuen E-Mail Nachrichten, auf die Verfügbarkeit von Texten oder auf die Publikation einer neuen Audiodatei beziehen. Ein günstiger Zeitpunkt kann sich aber auch auf die Verfügbarkeit einer Kommunikationsverbindung zwischen dem Kommunikationsnetzwerk 40 und dem Kommunikationsendgerät 20, auf die Auslastung des Kommunikationsnetzwerks 40, auf die Auslastung von Teilen des Kommunikationsnetzwerks 40, auf einen Zeitpunkt welcher durch eine Eingabe des Benutzers an einem der Kommunikationsendgeräte erfolgt oder auf irgendeinen anderen Zeitpunkt beziehen.

Die Übertragung der verschlüsselten Daten vD kann auch gemäss verschiedener Szenarien erfolgen. So kann ein Szenario sein, dass die verschlüsselten Daten vD zu irgendeinem Zeitpunkt über eine breitbandige Kommunikationsverbindung, wie beispielsweise einer Ethernet Verbindung, in der Nacht auf das Kommunikationsendgerät 20 übertragen werden. Ein solches Szenario kann beispielsweise gewählt werden, um eine sehr grosse verschlüsselte Videodatei, wie beispielsweise in der Grössenordnung von 5 GByte, auf das Kommunikationsendgerät 20 zu übertragen. Oder in einem anderen Szenario können verschlüsselte Daten auf das Kommunikationsendgerät 20 übertragen werden, sobald der Benutzer mit diesem Kommunikationsendgerät 20 in den Wirkungsbereich eines drahtlosen Kommunikationsnetzwerks, wie beispielsweise eines WLAN Netzwerks oder eines UWB Netzwerks in einem Bahnhof oder in einem Flughafengelände, kommt. Ein solches Szenario kann beispielsweise gewählt werden, um einem Benutzer vor dem Besteigen des Zugs verschlüsselte E-Mail Nachrichten oder verschlüsselte Texte auf sein Kommunikationsendgerät 20 zu übertragen. Es sei hier erwähnt, dass sich verschlüsselte Texte beispielsweise auf die aktuelle elektronische Tagesausgabe einer Tageszeitung beziehen können.

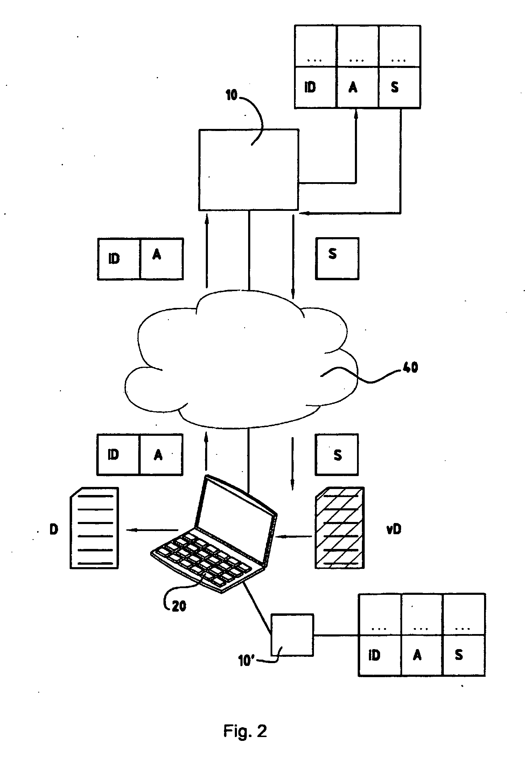

In Figur 2 werden die in Figur 1 eingeführten Bezugszeichen beibehalten. Wie in Figur 2 gezeigt, werden Authentisierungsdaten A vom Kommunikationsendgerät 20 an das Zentralmodul 10 übertragen. Damit wird die Berechtigung am elektronischen Schlüssel S authentisiert. Anschliessend werden zumindest Teile des elektronischen Schlüssels S vom Zentralmodul 10 auf das Kommunikationsendgerät 20 übertragen. Mittels des elektronischen Schlüssels S können die auf dem Kommunikationsendgerät abgespeicherten verschlüsselten Daten vD entschlüsselt werden, auf dem Kommunikationsendgerät als Daten D abgespeichert werden, wobei der Benutzer auf diese Daten D zugreifen kann.

Eine Authentisierung der Berechtigung am elektronischen Schlüssel S kann gemäss bekannten Verfahren erfolgen. Solche Verfahren können Passwort basiert, Passphrasen basiert, mittels einer SecureID Karte erfolgen (SecureID: Authentisierungsverfahren der Firma RSA Security), auf der Erfassung von biometrischen Merkmalen basieren oder auf einem beliebigen anderen Berechtigungsnachweis basieren.

Wie in den Figuren 1 bis 3 durch die punktierten Bereiche angedeutet, können die Identifikation iD, die Authentisierungsdaten A und der Schlüssel S in einer Tabelle mit Tupel solcher Daten abgespeichert sein. Dabei kann ein bestimmtes Tupel mit einer Identifikation iD, mit Authentisierungsdaten A und mit einem Schlüssel S für einen bestimmten Zweck vorgesehen sein. So kann ein erstes Tupel eine Identifikation iD umfassen, welche sich auf Videodaten bezieht. Ein zweites Tupel kann eine Identifikation iD umfassen, welche sich auf Audiodaten bezieht. So können beispielsweise Videodaten und Audiodaten mit einem unterschiedlichen Schlüssel verschlüsselt werden, beispielsweise für Videodaten mit einem Schlüssel, welcher zu einer besonderes hohen Leistungsfähigkeit bei der Verschlüsselung der Videodaten führt und beispielsweise für Audiodaten mit einem Schlüssel welcher zu einer besonders hohen Sicherheit führt.

In Figur 2 bezieht sich das Bezugszeichen 10' auf eine auf dem Kommunikationsendgerät 20 angebrachte lokale Kopie des Zentralmoduls 10. Die lokale Kopie 10' des Zentralmoduls 10 kann dieselben Funktionalitäten wie das Zentralmodul 10 umfassen. So können von den Tupel mit einer Identifikation iD, mit Authentifizierungsdaten A und mit einem Schlüssel S ebenfalls lokale Kopien auf dem Kommunikationsendgerät 20 abgespeichert werden. Die lokale Kopie 10' des Zentralmoduls sowie die lokalen Kopien der genannten Tupel können beispielsweise durch die Verwendung eines geheimen Schlüssels, wie beispielsweise eines PINs (PIN: Personal Identification Number), geschützt werden. So kann es vorgesehen sein, dass der Zugriff auf die lokale Kopie dieser Funktionalitäten und Daten nur für einen Benutzer ermöglicht wird, welcher den geheimen Schlüssel kennt. Selbstverständlich kann diese lokale Kopie mit Funktionalitäten und Daten beispielsweise inkrementell den entsprechenden Funktionalitäten und Daten des Zentralmoduls 10 nachgeführt werden. Oder es können in der lokalen Kopie nur bestimmte Funktionalitäten und Daten abgespeichert werden.

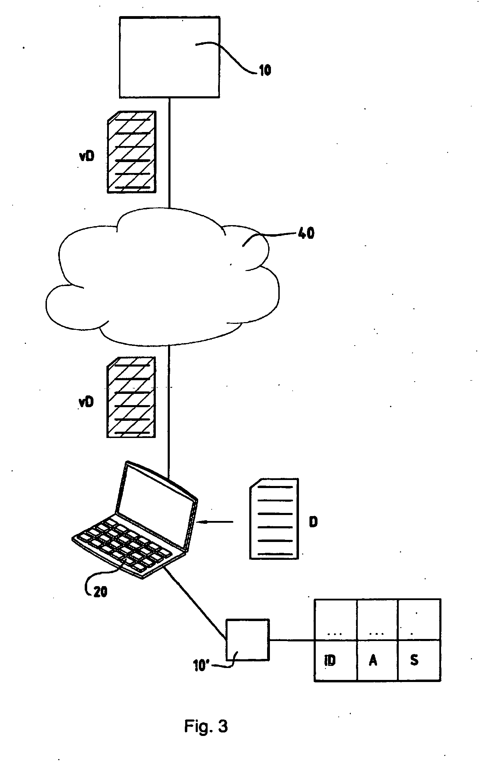

Wie in Figur 3 gezeichnet, können auf dem Kommunikationsendgerät 20 Daten D in verschlüsselte Daten vD verschlüsselt werden und an ein weiteres Kommunikationsgerät übertragen werden. So kann auf dem Kommunikationsendgerät 20 eine lokale Kopie 10' des Zentralmoduls 10 mit der Funktionalität des Verschlüsselns von Daten und einem entsprechenden Schlüssel S abgespeichert sein. Der Benutzer des Kommunikationsendgeräts 20 kann beispielsweise eine Videodatei neu erfassen. Sobald die Videodatei fertiggestellt ist, kann die Videodatei mittels der durch die lokalen Kopie 10' des Zentralmoduls 10 zur Verfügung gestellten Funktionalitäten in eine verschlüsselte Videodatei verschlüsselt werden. Selbstverständlich kann der Benutzer auch durch eine entsprechende Abfrage im Zentralmodul 10 einen Schlüssel S zur Verschlüsselung der Videodatei anfordern. Die Videodatei kann in eine verschlüsselte Videodatei verschlüsselt werden und die verschlüsselte Videodatei kann auf dem Kommunikationsendgerät 20 abgespeichert werden. Sobald das Kommunikationsendgerät 20 in den Wirkungsbereich eines leistungsfähigen Netzwerks, also beispielsweise in den Wirkungsbereich eines WLAN Netzwerks, kommt, kann die verschlüsselte Videodatei an ein weiteres Kommunikationsgerät übermittelt werden. Das weitere Kommunikationsgerät kann sich beispielsweise auf das Zentralmodul 10, auf einen Flie-Server, auf ein Kommunikationsendgerät eines anderen Benutzers oder auf irgendein anderes weiteres Kommunikationsgerät beziehen.

## Patentansprüche

1. Verfahren zur Datenübertragung, ausgeführt durch ein Zentralmodul (10), das Verfahren umfassend:
Empfangen von Authentisierungsdaten (A) von einem Kommunikationsendgerät (20),
Speichern von den Authentisierungsdaten (A), wobei die Authentisierungsdaten (A) einer Identifikation (iD) zugeordnet sind,
Erzeugen eines elektronischen Schlüssels (S), wobei der elektronische Schlüssel (S) den Authentisierungsdaten (A) und der Identifikation (iD) zugeordnet abgespeichert wird,
Authentisieren der Berechtigung am elektronischen Schlüssel (S) für das Kommunikationsendgerät (20) mittels der empfangenen Authentisierungsdaten (A),
Überprüfen einer Verfügbarkeit des Kommunikationsendgeräts (20) mittels eines Verfügbarkeitsmoduls des Zentralmoduls (10),
Erzeugen von verschlüsselten Daten (vD), mittels eines Verschlüsselungsmoduls, von Daten (D) und von mindestens einem Teil des elektronischen Schlüssels (S), wobei den Daten (D) oder den verschlüsselten Daten (vD) oder beiden die Identifikation (iD) zugeordnet wird, und wobei die Authentisierungsdaten (A) der Identifikation (D) zugeordnet abgespeichert werden,
Übertragen der verschlüsselten Daten (vD) und mindestens eine: Teils des elektronischen Schlüssels (S) an das Kommunikationsendgerät (20), wobei das Kommunikationsgerät (20) verfügbar und berechtigt ist.

2. Verfahren nach Anspruch 1, **dadurch gekennzeichnet, dass** im Zentralmodul (10) respektive auf dem Kommunikationsendgerät (20) ein Benutzerprofil abgespeichert wird, wobei Daten gemäss dem Benutzerprofil selektiert und verschlüsselt sowie an das Kommunikationsendge ät (20) respektive an ein weiteres Kommunikationsgerät übertragen werden.

3. Verfahren nach einem der Ansprüche 1 bis 2, **dadurch gekennzeichnet, dass** mittels eines Aktivierungsmoduls des Zentralmoduls (10) eire Netzwerkschnittstelle des Kommunikationsendgeräts (20) aktiviert wird und dass die verschlüsselten Daten (vD) über die aktivierte Netzwerkschnittstelle an das Kommunikationsendgerät (20) übertragen werden.

4. Verfahren nach einem der Ansprüche 1 bis 3, **dadurch gekennzeichnet, dass** die verschlüsselten Daten (vD) an ein Netzwerkgerät einer Netzwerkinfrastruktur übertragen werden, wobei die verschlüsselten Daten (vD) auf dem Netzwerkgerät abgespeichert werden und asynchron vom Netzwerkgerät an das Kommunikationsendgerät (20) übertragen werden.

5. Verfahren nach einem der Ansprüche 1 bis 4, **dadurch gekennzeichnet, dass** bei der Übermittlung des mindestens einen Teils des elektronischen Schlüssels (S) ein Geldwertbetrag von einem Benutzerkonto abgebucht wird.

6. Verfahren nach einem der Ansprüche 1 bis 5, **dadurch gekennzeichnet, dass** die verschlüsselten Daten (vD) einen Programmcode umfassen, welcher Programmcode zum Entschlüsseln der verschlüsselten Daten (vD) ausgeführt werden muss, wobei bei der Ausführung des Programmcodes Gültigkeitskriterien überprüft werden.

7. System zur Datenübertragung mit einem Zentralmodul mit Mitteln zur Durchführung eines Verfahrens gemäβ Anspruch 1

8. System nach Anspruch 7, **dadurch gekennzeichnet, dass** im Zentralmodul (10) respektive auf dem Kommunikationsendgerät (20) ein Benutzerprofil abspeicherbar ist, wobei Daten gemäss dem Benutzerprofil selektierbar und verschlüsselbar sowie an das Kommunikationsendgerät (20) respektive an ein weiteres Kommunikationsgerät übertragbar sind.

9. System nach einem der Ansprüche 7 bis 8, **dadurch gekennzeichnet, dass** mittels eines Aktivierungsmoduls des Zentralmoduls (10) eine Netzwerkschnittstelle des Kommunikationsendgeräts (20) aktivierbar ist und dass die verschlüsselten Daten (vD) über die aktivierte Netzwerkschnittstelle an das Kommunikationsendgerät (20) übertragbar ist.

10. System nach einem der Ansprüche 7 bis 9, **dadurch gekennzeichnet, dass** die verschlüsselten Daten (vD) an ein Netzwerkgerät einer Netzwerkinfrastruktur übertragbar sind, wobei die verschlüsselten Daten (vD) auf dem Netzwerkgerät abspeicherbar sind und asynchron vom Netzwerkgerät an das Kommunikationsendgerät (20) übertragbar sind.

11. System nach einem der Ansprüche 7 bis 10, **dadurch gekennzeichnet, dass** bei der Übermittlung des mindestens einen Teils des elektronischen Schlüssels (S) ein Geldwertbetrag von einem Benutzerkonto abbuchbar ist.

12. System nach einem der Ansprüche 7 bis 11, **dadurch gekennzeichnet, dass** die verschlüsselten Daten (vD) einen Programmcode umfassen, welcher Programmcode zum Entschlüsseln der verschlüsselten Daten (vD) zwingend ausführbar ist, wobei bei der Ausführung des Programmcodes Gültigkeitskriterien überprüfbar sind.

## Claims

1. Method for data transmission, implemented by a central module (10), the method comprising:
receiving authentication data (A) from a communications terminal (20),
storing the authentication data (A), the authentication data (A) being assigned to an identification (iD),
generating an electronic key (S), the electronic key (S) being stored assigned to the authentication data (A) and the identification (iD),
authenticating the authorization on the electronic key (S) for the communications terminal (20) by means of the received authentication data (A),
checking the availability of the communications terminal (20) by means of an availability module of the central module (10)
generating encrypted data (vD), by means of an encryption module, from data (D) and from at least one part of the electronic key (S), the identification (iD) being assigned to the data (D) or the encrypted data (vD) or both, and the authentication data (A) being stored assigned to the identification (D) <sic.>,
transmitting the encrypted data (vD) and at least one part of the electronic key (S) to the communications terminal (20), whereby the communications terminal (20) is available and authorized.

2. Method according to claim 1, **characterized in that** a user profile is stored in the central module (10) or respectively on the communications terminal (20), data being selected and encrypted in accordance with the user profile and being transmitted to the communications terminal (20) or respectively to a further communications device.

3. Method according to one of claims 1 to 2, **characterized in that** a network interface of the communications terminal (20) is activated by means of an activation module of the central module (10) and **in that** the encrypted data (vD) are transmitted to the communications terminal (20) via the activated network interface.

4. Method according to one of the claims 1 to 3, **characterized in that** the encrypted data (vD) are transmitted to a network device of a network infrastructure, the encrypted data (vD) being stored on the network device and being asynchronously transmitted from the network device to the communications terminal (20).

5. Method according to one of claims 1 to 4, **characterized in that** a monetary amount value is debited from a user account upon the transmission of the at least one part of the electronic key (S).

6. Method according to one of claims 1 to 5, **characterized in that** the encrypted data (vD) include a program code, which program code must be executed in order to decrypt the encrypted data (vD), validity criteria being checked during the execution of the program code.

7. System for data transmission with a central module with means for executing a method according to claim 1.

8. System according to claim 7, **characterized in that** a user profile is storable in the central module (10) or respectively on the communications terminal (20), data being able to be selected and encrypted in accordance with the user profile and being able to be transmitted to the communications terminal (20) or respectively to a further communications device.

9. System according to one of the claims 7 or 8, **characterized in that** a network interface of the communications terminal (20) is able to be activated by means of an activation module of the central module (10) and **in that** the encrypted data (vD) is <sic. are> able to be transmitted to the communications terminal (20) via the activated network interface.

10. System according to one of the claims 7 to 9, **characterised in that** the encrypted data (vD) are able to be transmitted to a network device of a network infrastructure, the encrypted data (vD) being able to be stored on the network device and being able to be transmitted asynchronously from the network device to the communications terminal (20).

11. System according to one of the claims 7 to 10, **characterized in that** a monetary amount value is able to be debited from a user account during the transmission of the at least one part of the electronic key (S).

12. System according to one of the claims 7 to 11, **characterized in that** the encrypted data (vD) include a program code, which program code is able to be executed in a compulsory way for decryption of the encrypted data (vD), validity criteria being able to be checked during the execution of the program code.

## Revendications

1. Procédé pour la transmission de données, mis en oeuvre par un module central (10), le procédé comprenant:
la réception de données d'authentification (A) depuis un terminal de communication (20),
l'enregistrement des données d'authentification (A), les données d'authentification (A) étant attribuées à une identification (iD),
la génération d'une clé électronique (S), la clé électronique (S) étant enregistrée de manière assignée aux données d'authentification (A) et à l'identification (iD),
l'authentification de l'autorisation sur la clé électronique (S) pour le terminal de communication (20) au moyen des données d'authentification reçues (A),
la vérification d'une disponibilité du terminal de communication (20) au moyen d'un module de disponibilité du module central (10)
la génération de données chiffrées (vD), au moyen d'un module de chiffrage, à partir de données (D) et d'au moins une partie de la clé électronique (S), l'identification (iD) étant assignée aux données (D) ou aux données chiffrées (vD) ou aux deux, et les données d'authentification (A) étant enregistrées de manière assignée à l'identification (iD),
la transmission de données chiffrées (vD) et d'au moins une partie de la clé électronique (S) au terminal de communication (20), le terminal de communication (20) étant disponible et autorisé.

2. Procédé selon la revendication 1, **caractérisé en ce qu'**un profil d'utilisateur est enregistré dans le module central (10) ou respectivement sur le terminal de communication (20), les données étant sélectionnées et chiffrées selon le profil de l'utilisateur et étant transmises au terminal de communication (20) ou respectivement à un autre appareil de communication.

3. Procédé selon l'une quelconque des revendications 1 à 2, **caractérisé en ce qu'**une interface réseau du terminal de communication (20) est activée au moyen d'un module d'activation du module central (10) et **en ce que** les données chiffrées (vD) sont transmises au terminal de communication (20) via l'interface réseau activée.

4. Procédé selon l'une quelconque des revendications 1 à 3, **caractérisé en ce que** les données chiffrées (vD) sont transmises à un appareil de réseau d'une infrastructure de réseau, les données chiffrées (vD) étant enregistrées sur l'appareil de réseau et étant transmises de manière asynchrone de l'appareil de réseau au terminal de communication (20).

5. Procédé selon l'une quelconque des revendications 1 à 4, **caractérisé en ce qu'**un montant de valeur monétaire est débité d'un compte d'utilisateur lors de la transmission d'au moins une partie de la clé électronique (S).

6. Procédé selon l'une quelconque des revendications 1 à 5, **caractérisé en ce que** les données chiffrées (vD) comprennent un code de programme, lequel code de programme doit être exécuté pour déchiffrer les données chiffrées (vD), les critères de validité étant contrôlés lors de l'exécution du code de programme.

7. Système pour la transmission de données avec un module central avec des moyens pour l'exécution d'un procédé selon la revendication 1.

8. Système selon la revendication 7, **caractérisé en ce qu'**un profil d'utilisateur est enregistrable dans le module central (10) ou respectivement sur le terminal de communication (20), les données étant sélectionnables et chiffrables selon le profil d'utilisateur et étant transmissibles au terminal de communication (20) ou respectivement à un autre appareil de communication.

9. Système selon l'une quelconque des revendications 7 ou 8, **caractérisé en ce qu'**une interface réseau du terminal de communication (20) est activable au moyen d'un module d'activation du module central (10) et **en ce que** les données chiffrées (vD) sont transmissibles au terminal de communication (20) via l'interface réseau activée.

10. Système selon l'une quelconque des revendications 7 à 9, **caractérisé en ce que** les données chiffrées (vD) sont transmissibles à un appareil de réseau d'une infrastructure de réseau, les données chiffrées (vD) étant enregistrables sur l'appareil de réseau et étant transmissibles de manière asynchrone de l'appareil de réseau au terminal de communication (20).

11. Système selon l'une quelconque des revendications 7 à 10, **caractérisé en ce qu'**un montant de valeur monétaire est débitable d'un compte d'utilisateur lors de la transmission d'au moins une partie de la clé électronique (S).

12. Système selon l'une quelconque des revendications 7 à 11, **caractérisé en ce que** les données chiffrées (vD) comprennent un code de programme, lequel code de programme est exécutable de manière obligatoire pour le déchiffrage de données chiffrées (vD), des critères de validité pouvant être contrôlés lors de l'exécution du code de programme.
